## Europäisches Patentamt
## European Patent Office
## Office européen des brevets

(19)

(11) Veröffentlichungsnummer: **0 368 036**

**A2**

(12) # EUROPÄISCHE PATENTANMELDUNG

(21) Anmeldenummer: **89119226.2**

(22) Anmeldetag: **17.10.89**

(51) Int. Cl.5: **G03H 1/16**

(30) Priorität: **11.11.88 DE 3838297**

(43) Veröffentlichungstag der Anmeldung:
**16.05.90 Patentblatt 90/20**

(84) Benannte Vertragsstaaten:
**CH FR GB LI NL**

(71) Anmelder: **Fried. Krupp Gesellschaft mit beschränkter Haftung**
**Altendorfer Strasse 103**
**D-4300 Essen 1(DE)**

(72) Erfinder: **Gohr, Hans-Georg**
**Paul-Löbe-Strasse 71**
**D-4397 Gladbeck(DE)**
Erfinder: **Hahn, Ulrich, Dr.**
**Mülheimer Strasse 42**
**D-4300 Essen 1(DE)**
Erfinder: **Hauck, Richard, Dr.**
**Pastor-Hoffmann-Strasse 6**
**D-4405 Nottuln(DE)**

(54) Vorrichtung zur Herstellung kleiner Fourier-Hologramme.

(57) Es werden Vorrichtungen zur Herstellung von Fourier-Hologrammen eines planen transparenten Objekts angegeben, die sich von den bekannten Vorrichtungen dadurch unterscheiden, daß sich unmittelbar vor oder hinter dem Objekt eine Streuscheibe befindet, deren mittlere Korngröße größer ist als die einer Mattscheibe und die höchstens entweder in der räumlichen Anordnung oder in der Größenverteilung der Körner Regelmäßigkeiten aufweist.

EP 0 368 036 A2

## Vorrichtung zur Herstellung kleiner Fourier-Hologramme

Die Erfindung betrifft eine Vorrichtung zur Herstellung kleiner Fourier-Hologramme eines planen tranparenten Objekts, die auf zwei verschiedene Arten gewonnen werden. Entweder wird das Fourierspektrum, das mit Hilfe einer Linse hinter dieser Linse erzeugt wird, wobei sich das Objekt vor oder hinter der Linse befindet und von kohärentem Licht durchstrahlt wird, in bekannter Weise mit Hilfe eines Referenzstrahls holographiert, oder ein kollimierter kohärenter Laserstrahl wird nach Durchstrahlen des planen transparenten Objekts in einer Ebene hinter dem Objekt mit einer Referenzkugelwelle überlagert und das Interferenzmuster in dieser Ebene wird als Fourier-Hologramm aufgenommen.

Wird z.B. ein Schwarz-Weiß-Dia in der Brennebene (Objektebene) einer Linse mit kohärentem kollimierten Licht senkrecht durchstrahlt, so erhält man hinter der Linse in der Brennebene (Fourierebene) das Fourierspektrum des Dias. Dieses Fourierspektrum nimmt nur eine begrenzte Fläche ein und hat im allgemeinen eine so große Dynamik, daß es nicht holographierbar ist. Wird dieses Spektrum über eine weitere Linse, in deren Brennebene es sich befindet, wieder transformiert, so ist in der Brennebene hinter dieser Linse wieder die Abbildung des Dias zu sehen. Diese Abbildung ist nur dann vollständig und ungestört, wenn der Strahlengang nicht durch zu kleine Linsen oder Blenden eingeengt wird. Eine gute Abbildungsqualität ist andererseits bekanntlich Voraussetzung für eine gute Rekonstruktionsqualität des entsprechenden Fourier-Hologramms, das in bekannter Weise mit Hilfe eines Referenzstrahls aus dem Fourierspektrum hergestellt wird. Um das Fourierspektrum unempfindlich gegenüber solchen Störungen zu machen, wird unmittelbar auf das Dia eine Mattscheibe gelegt. Jetzt strahlt von jedem Objektpunkt Licht in verschiedene Richtungen, so daß auch die Fourierebene an jedem Ort von jedem Objektpunkt Licht erhält. Mit einer Blende kann daher ein in weiten Grenzen beliebiger Ausschnitt der ausgeleuchteten Fourierebene ausgewählt werden, ohne daß die Abbildung merklich gestört ist. Das Fourierspektrum hat nicht nur eine große Redundanz, sondern außerdem eine geringe Dynamik, es ist holographierbar. Die Abbildung ist im allgemeinen jedoch recht lichtschwach, da nur ein Teil des gesamten Fourierspektrums genutzt wird. Besonders nachteilig ist, daß mit Verkleinerung der Blende die Abbildung und damit auch die Rekonstruktion des Fourierhologramms mit einem immer größeren Specklemuster überlagert wird, so daß schließlich die Abbildung bzw. Rekonstruktion nicht mehr erkennbar ist. Dieses Specklemuster wird von der Mattscheibe erzeugt.

Die Störung durch das Specklemuster kann man zum Beispiel dadurch reduzieren, daß man bei Aufnahme des Bildes bzw. der Rekonstruktion des Fourier-Hologramms mit einer Kamera vor dem Objektiv eine sich drehende transparente Scheibe ungleichmäßiger Dicke im Strahlengang anbringt. Infolge der zeitlichen Mittelung im Bild kann das sichtbare Specklemuster erheblich abgeschwächt werden. Auch bei den weiteren Verfahren ist das wesentliche Verfahrenselement zur Eliminierung des Specklemusters eine zeitliche Mittelung von Bildern.

Aufgabe der vorliegenden Erfindung ist eine Erzeugung kleiner Fourier-Hologramme mit guter Rekonstruktion ohne Zeitmittelungsverfahren, die bei vergleichbarer Qualität bezüglich Redundanz und Rekonstruktionsqualität kleiner sind als herkömmlich, wie oben beschrieben, mit Hilfe der Mattscheibe erzeugte Fourier-Hologramme.

Gelöst wird die Aufgabe durch eine Vorrichtung, die sich von den bekannten Vorrichtungen zur Erzeugung von Fourier-Hologrammen dadurch unterscheidet, daß die Mattscheibe, die sich unmittelbar vor oder hinter dem Objekt befindet, gegen eine Streuscheibe ausgetauscht ist, deren mittlere Korngröße größer ist als die einer Mattscheibe und die nicht gleichzeitig Regelmäßigkeiten in räumlicher Anordnung und Größenverteilung der Körner aufweist. Korn ist dabei definiert als ein Gebiet mit relativ homogener optischer Weglänge.

Bei den bekannten Vorrichtungen wird das Fourier-Hologramm im allgemeinen als Holographie eines Fourierspektrums gewonnen. Das Fourierspektrum eines planen transparenten Objekts, das von kohärentem Licht durchstrahlt wird, wird mit Hilfe einer Linse hergestellt. Das Objekt kann sich vor oder hinter der Linse befinden und die Lage des Fourierspektrums d.h. seine Fourierebene ergibt sich entsprechend den Regeln der geometrischen Optik. Als Fourierspektren werde dabei alle Transformationen des Objekts bezeichnet, die bis auf einen Phasenfaktor mit der Fouriertransformation übereinstimmen.

Bei einer weiteren bekannten Vorrichtung wird das Fourier-Hologramm ohne Verwendung von Linsen hergestellt. Der kollimierte kohärente Laserstrahl wird nach Durchstrahlung des planen transparenten Objekts in einer Ebene hinter dem Objekt mit einer Referenzkugelwelle überlagert und das Fourier-Hologramm ist die Aufnahme des Interferenzmusters in dieser Ebene. Die entsprechende erfindungsgemäße Vorrichtung unterscheidet sich wiederum von dieser bekannten Vorrichtung dadurch, daß sich eine Streuscheibe wie oben angegeben unmittelbar vor oder hinter dem Objekt befindet.

Besonders günstig ist eine Streuscheibe mit einer mittleren Korngröße von mindestens 0,1 mm.

Die Erfindung beruht auf der Entdeckung, daß bei Vorrichtungen entsprechend Anspruch 1 der Durchmesser des Fourierspektrums mit zunehmendem mittleren Korndurchmesser der Streuscheibe kleiner wird. Die

Funktion der Abhängigkeit ähnelt einer Hyperbel, so daß zunächst bei größer werdendem mittleren Korndurchmesser der Durchmesser des Fourierspektrums schnell kleiner wird, während anschließend eine weitere Erhöhung des mittleren Korndurchmessers kaum noch etwas zur Verringerung des Durchmessers des Fourierspektrums beiträgt. Mit steigendem mittleren Korndurchmesser der Streuscheibe wird der Streuwinkel in der Objektebene reduziert, so daß damit auch die Redundanz im Fourierspektrum verringert wird. Die Größe des mittleren Korndurchmessers ist daher vorteilhafterweise so zu wählen, daß bei weiterer Vergrößerung des mittleren Korndurchmessers die Verringerung des Durchmessers des Fourierspektrums nur noch unwesentlich ist, aber die Redundanz und Dynamik noch hinreichend sind. Damit wird gleichzeitig auch das Fourier-Hologramm optimiert.

Für Vorrichtungen nach Anspruch 2 gilt diese Entdeckung in analoger Weise für das Fourier-Hologramm.

Zur weiteren Optimierung der Größe des Fourier-Hologramms bei Vorrichtungen entsprechend Anspruch 1 wird der wirksame Teil des Fourierspektrums auf einen Teil des ausgeleuchteten Bereichs der Fourierebene, z. B. mit einer Blende verkleinert. Die Größe wird dabei vorteilhafterweise so gewählt, daß das entstehende Specklemuster die Abbildung bzw. die Rekonstruktion des Objekts noch nicht wesentlich stört.

Die Streuscheibe entsprechend Anspruch 1 wird vorzugsweise dadurch gewonnen, daß die Lichtverteilung, d.h. das Specklemuster einer mit kohärentem Licht durchstrahlten Mattscheibe auf einem planen lichtempfindlichen Medium in der Weise aufgezeichnet wird, daß die räumliche Intensitätsverteilung während der Aufnahme in eine entsprechende Verteilung der optischen Weglängen umgesetzt wird.

Beispielsweise kann als lichtempfindliches Medium eine silberhalogenidhaltige photographische Platte verwendet werden. Die belichtete Platte wird in bekannter Weise so weiter verarbeitet, daß als Resultat ein Bild mit einer Phasenverteilung vorliegt.

Durch Verändern der Verfahrensparameter, z.B. der Belichtungszeit, der lichtempfindlichen Medien, z.B. der photographischen Platte, wird die mittlere Modulationstiefe der optischen Weglänge der Streuscheibe verändert. Diese Modulationstiefe beeinflußt andererseits die Dynamik des Fourierspektrums bzw. Fourier-Hologramms. Bis zu einem bestimmten Höchstwert wird mit steigender Modulationstiefe die Dynamik des Fourierspektrums reduziert. Danach beeinflußt die Modulationstiefe die Dynamik des Fourierspektrums nicht mehr. Es ist daher besonders vorteilhaft, die mittlere Modulationstiefe der optischen Weglänge auf den wirksamen Höchstwert einzustellen, um ein Fourierspektrum bzw. Fourier-Hologramm möglichst geringer Dynamik zu erhalten.

Andererseits läßt sich die erfindungsgemäße Streuscheibe auch durch Behandeln von normalem Glas herstellen. Vorteilhafterweise wird eine einseitig polierte Glasscheibe auf der Gegenseite mit Flußsäure geätzt. Danach wird die geätzte Seite so lange poliert, bis das Fourierspektrum der Streuscheibe die gewünschte Größe hat.

Die Zeichnung zeigt in

Fig. 1 4 f-Anordnung zur Erzeugung des Fourierspektrums und des Bildes des Objekts,

Fig. 2 als Objekt verwendete Codierscheibe,

Fig. 3 Abbildung eines Ausschnitts der Codierscheibe (Fig. 2) in der Objektebene unter Verwendung einer Mattscheibe, wirksames Fourierspektrum 1 cm Durchmesser,

Fig. 4 Abbildung eines Ausschnitts der Codierscheibe (Fig. 2) in der Objektebene unter Verwendung einer Mattscheibe, wirksames Fourierspektrum 0,5 cm Durchmesser

Fig. 5 Abbildung eines Ausschnitts der Codierscheibe (Fig. 2) in der Objektebene mit grobkörniger Streuscheibe, wirksames Fourierspektrum 1 cm Durchmesser

Fig. 6 Abbildung eines Ausschnitts der Codierscheibe (Fig. 2) in der Objektebene mit grobkörniger Streuscheibe, wirksames Fourierspektrum 0,5 cm Durchmesser

Fig. 7 Intensitätsverteilung des Fourierspektrums über seinem Durchmesser (bei grobkörniger Streuscheibe)

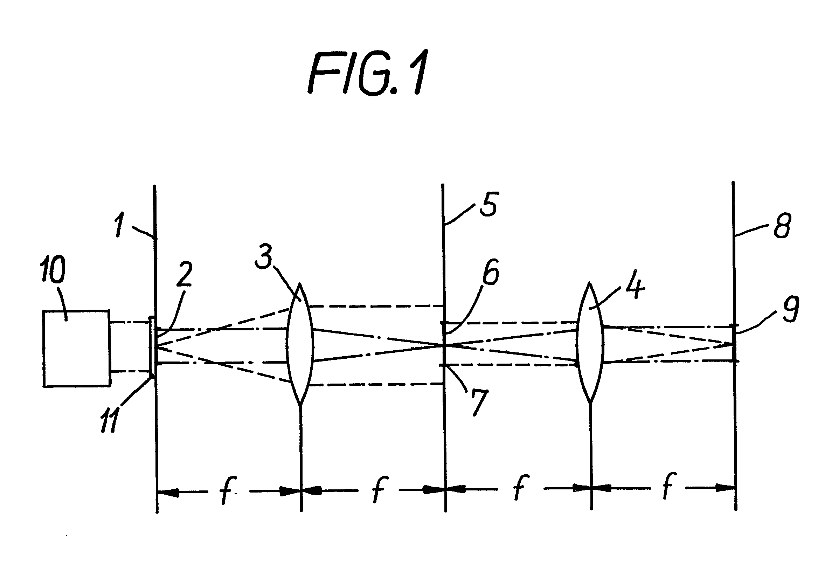

Fig. 1 zeigt die bekannte 4 f-Anordnung. Ein Laser 10 bestrahlt das Objekt 2 in der Objektebene 1, f ist die Brennweite der Linsen 3 und 4. In der Fourierebene 5 erhält man das Fourierspektrum 7 des Objekts 2. Mit der Irisblende 6 wird ein Teil des Fourierspektrums 7 abgeblendet. In der Bildebene 8 erscheint Abbildung 9 des Objekts 2. Die Mattscheibe bzw. Streuscheibe 11 befindet sich direkt vor dem Objekt 2.

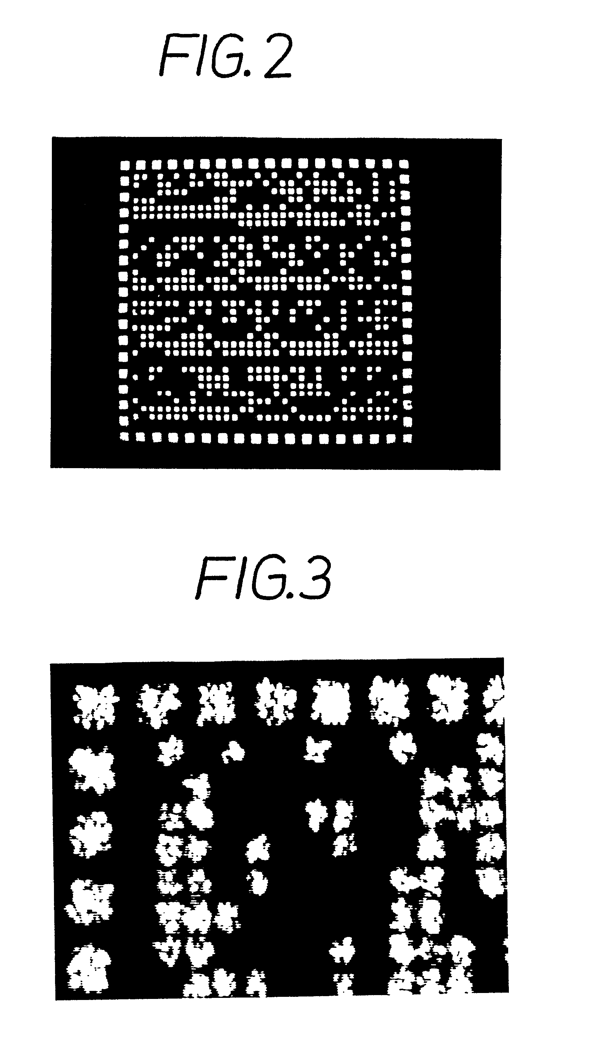

Der Gegenstand der Erfindung wird anhand des folgenden Beispiels näher beschrieben. Eine 4 f-Anordnung nach Fig. 1 hat ein Objekt entsprechend Fig. 2 mit maximal 32 x 32 Punkten und einer Größe von 4 x 4 mm². Die Laserquelle hat eine Wellenlänge von 633 nm. Die Brennweite der Linsen beträgt 200 mm. Die Streuscheibe bzw.

Mattscheibe liegt Schicht auf Schicht auf der Objektscheibe, um zusätzliche Specklemuster zu vermeiden. Zur Herstellung der Streuscheibe ist ein Kunststoffträger mit einer HOLOTEST-Emulsion 8E75HD von Agfa-Gevaert verwendet worden. Die Korngröße dieser Emulsion beträgt ca. 35 nm. Der Kunststoffträger ist in einer Entfernung von 500 mm hinter einer Mattscheibe, die von einem kollimierten Laserstrahl mit der Wellenlänge 631 nm durchstrahlt wird, mit 54 <W/cm² 0,7 s belichtet worden. Der Laserstrahl hatte einen Durchmesser von 3 mm. Der Kunststoffträger ist anschließend bei Zimmertemperatur 3 min entwickelt worden. Der verwendete Entwickler besteht aus 0,25 g Metol, 5 g Natriumkarbonat, 1 g Ascorbinsäure und 100 ml destilliertem Wasser. Nach Ablauf der Entwicklungszeit ist der Kunststoffträger in fließendem Wasser ca. 2 min gewässert worden. Danach ist der Kunststoffträger ca. 2 min gebleicht worden (Rezept: 5 g Kaliumdichromat, 5 ml konzentrierte Schwefelsäure, 1 l destilliertes Wasser). Nachdem der Kunststoffträger ca. 15 min im fließenden Wasser gewässert worden ist, ist er ca. 2 min einem Stabilisierbad ausgesetzt worden (1 g Kupferbromid, 100 ml destilliertes Wasser). Danach ist der Kunststoffträger noch 10 min gewässert worden. Schließlich ist noch ein einminütiges Schlußbad angeschlossen worden, daß aus destilliertem Wasser mit einigen Tropfen Netzmittel besteht. Die so hergestellte Streuscheibe hat einen mittleren Korndurchmesser von 0,16 mm und eine Modulationstiefe von ca. 200 nm.

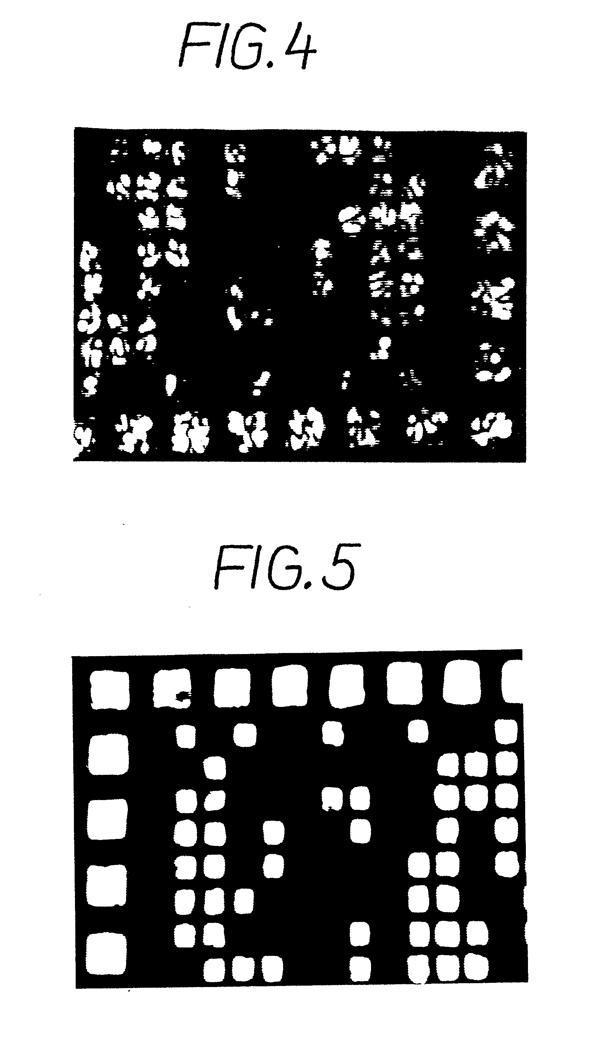

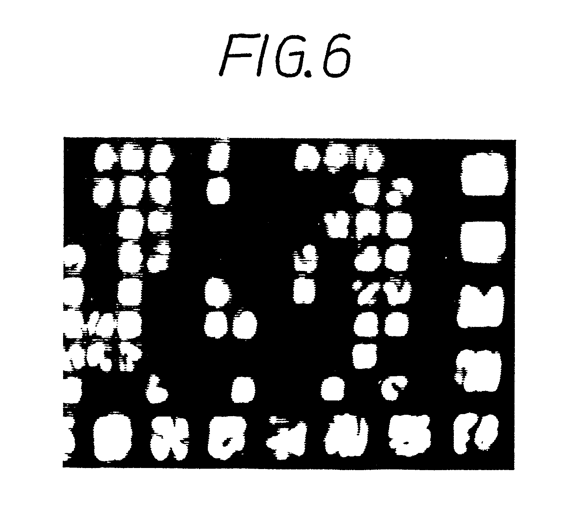

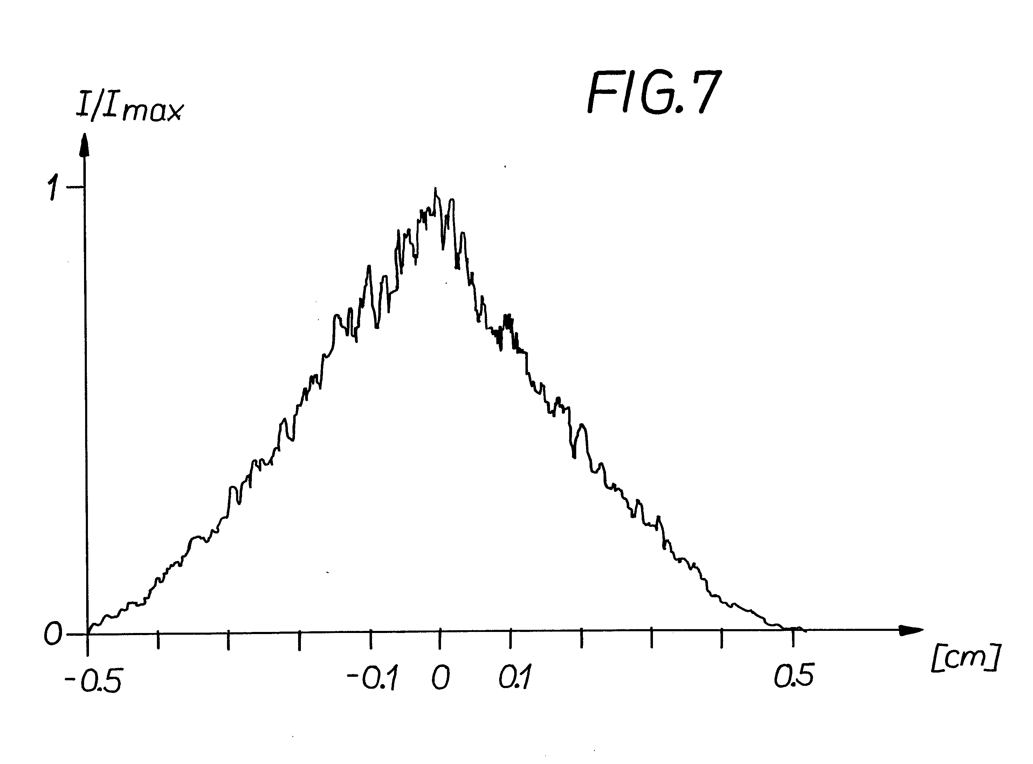

Bei Verwendung einer Mattscheibe in der beschriebenen Anordnung, schematisch in Fig. 1 dargestellt, erhalten wir die in Fig. 3 und Fig. 4 dargestellten Abbildungen in der Objektebene beim Durchmesser des Fourierspektrums von 1 cm beziehungsweise 0,5 cm. In Fig. 3 ist die Abbildung verspeckelt, jedoch noch auswertbar, in Fig. 4 ist die Abbildung stark verspeckelt und nicht mehr auswertbar. Bei Verwendung der grobkörnigen Streuscheibe erhalten wir als Abbildungen in der Objektebene Fig. 5 beziehungsweise Fig. 6 beim Durchmesser von 1 cm beziehungsweise 0,5 cm des Fourierspektrums. Fig. 5 zeigt eine fast speckelfreie Abbildung, eine große Verbesserung gegenüber Fig. 3 und Fig. 6 ist nur mäßig verspeckelt und noch gut auswertbar im Gegensatz zu Fig. 4. Fig. 7 zeigt die Intensitätsverteilung I/I max dieses Fourierspektrums. Damit ist das Fourierspektrum gut holographierbar. Das Fourier-Hologramm wird in bekannter Weise mit Hilfe eines Referenzstrahls hergestellt.

**Ansprüche**

1. Vorrichtung zur Herstellung eines kleinen Fourier-Hologramms eines Fourierspektrums eines planen transparenten Objekts, dessen Fourierspektrum mit Hilfe einer Linse erzeugt wird, wobei sich das Objekt vor oder hinter der Linse befindet und von kohärentem Licht durchstrahlt wird, so daß hinter der Linse das zugehörige Fourierspektrum erzeugt wird, das mit Hilfe eines Referenzstrahls holographiert wird,
**dadurch gekennzeichnet,**
daß sich unmittelbar vor oder hinter dem Objekt eine Streuscheibe befindet, deren mittlere Korngröße größer ist als die einer Mattscheibe und die höchstens entweder in der räumlichen Anordnung oder in der Größenverteilung der Körner Regelmäßigkeiten aufweist.

2. Vorrichtung zur Herstellung eines kleinen Fourier-Hologramms, bei dem der kollimierte kohärente Laserstrahl nach Durchstrahlen eines planen transparenten Objekts in einer Ebene hinter dem Objekt mit einer Referenz- Kugelwelle überlagert wird und das Interferenzmuster in diese Ebene aufgenommen wird, dadurch gekennzeichnet, daß sich unmittelbar vor oder hinter dem Objekt eine Streuscheibe befindet, deren mittlere Korngröße größer ist als die einer Mattscheibe und die höchstens entweder in der räumlichen Anordnung oder in der Größenverteilung der Körner Regelmäßigkeiten aufweist.

3. Vorrichtung nach Anspruch 1 oder 2, dadurch gekennzeichnet, daß die mittlere Korngröße der Streuscheibe mindestens 0,1 mm beträgt.

4. Vorrichtung nach Anspruch 1 oder 2, dadurch gekennzeichnet, daß bei gegebener Objektgröße der mittlere Korndurchmesser für die Streuscheibe so gewählt wird, daß bei weiterer Vergrößerung des mittleren Korndurchmessers sich das Fourierhologramm bei hinreichender Redundanz und Dynamik nur um wesentlich verkleinert.

5. Vorrichtung nach Anspruch 1, 3 oder 4, dadurch gekennzeichnet, daß ein Teil der ausgeleuchteten Fourierebene für die Abbildung des Objekts ausgewählt wird, der so klein ist, daß die Rekonstruktion des Fourier-Hologramms nur unwesentlich gestört ist.

6. Vorrichtung nach einem der Ansprüche 1 bis 5, dadurch gekennzeichnet, daß die Modulation der optischen Weglänge der Streuscheibe so gewählt ist, bis bei weiterer Erhöhung der Modulation die Dynamik des Fourier-Hologramms unverändert bleibt.

7. Vorrichtung nach einem der Ansprüche 1 bis 6, dadurch gekennzeichnet, daß die Streuscheibe eine Aufzeichnung der Lichtverteilung einer mit kohärentem Licht durchstrahlten Mattscheibe ist, bei der die räumliche Intensitätsverteilung in eine räumliche Verteilung der optischen Weglängen umgesetzt ist.

8. Vorrichtung nach einem der Ansprüche 1 bis 6, dadurch gekennzeichnet, daß die Streuscheibe aus einseitig poliertem Glas hergestellt ist, das auf der Gegenseite geätzt und anschließend poliert worden ist.

# FIG.1

EP 0 368 036 A2

## FIG. 2

## FIG.3

# FIG.4

# FIG.5

# FIG.6

FIG.7